# EUROPEAN PATENT SPECIFICATION

(11) **EP 3 044 187 B1**
(45) Date of publication and mention of the grant of the patent: **08.05.2019**
(21) Application number: 14765907.2
(22) Date of filing: 09.09.2014
(51) Int. Cl.: C05B 7/00

(54) **ACIDIC FERTILIZER COMPOSITIONS CONTAINING A METAL COMPLEX OF GLUTAMIC ACID N,N-DIACETIC ACID OR IMINODISUCCINIC ACID**
SAURE DÜNGEMITTELZUSAMMENSETZUNGEN MIT EINEM METALLKOMPLEX AUS GLUTAMINSÄURE-N,N-DIAZETINSÄURE ODER IMINODIBERNSTEINSÄURE
COMPOSITIONS D'ENGRAIS ACIDES CONTENANT UN COMPLEXE MÉTALLIQUE ACIDE GLUTAMIQUE-ACIDE N,N DIACÉTIQUE OU ACIDE IMINODISUCCINIQUE

(30) Priority: 12.09.2013 EP 13184115
(43) Date of publication of application: 20.07.2016
(73) Proprietor: Akzo Nobel Chemicals International B.V., 6824 BM Arnhem (NL)
(72) Inventor: REICHWEIN, Adrianus Maria, NL-6883 EK Velp (NL); BUGTER, Marcel Hendrikus Joseph, NL-6721 GM Bennekom (NL)
(74) Representative: Akzo Nobel Chemicals IP Group
(86) International application number: PCT/EP2014/069121
(87) International publication number: WO 2015/036374

(56) References cited:
- US-A1- 2012 027 832
- US-A1- 2013 000 370
- US-A1- 2013 012 383
- DATABASE WPI Week 199731 Thomson Scientific, London, GB; AN 1997-337018 XP002721377, & JP H09 136807 A (NITTO CHEM IND CO LTD) 27 May 1997 (1997-05-27)

## Description

The present invention relates to fertilizer compositions that contain a metal complex of a chelating agent selected from the group of glutamic acid N,N-diacetic acid (herein also abbreviated as GLDA) and iminodisuccinic acid (herein also abbreviated as IDHA), and that are acidic, wherein IDHA is sometimes also referred to as aspartic acid N-(1,2-dicarboxyethyl).

Acidic fertilizers are used to lower the pH of nutrient solutions and to provide plant nutrients at the same time.

Acidic fertilizer compositions are used in applications where calcium plays an important role. Calcium can be a fertilizer ingredient because calcium is an important nutrient which plants need to grow and besides, calcium is present almost everywhere in water and soil. However, calcium's major disadvantage is that it is not very well soluble at alkaline pH. Therefore in the presence of calcium, there often is a demand for acidic fertilizer composition to prevent undesirable precipitation, which also leads to subsequent fertilizer application challenges like proper dosing.

EP 056913 (OMS Investments) discloses a low pH stock solution for a fertilizer that contains urea phosphate and that prevents the formation of calcium phosphate, magnesium phosphate, and iron phosphate, which are not soluble. It is said that in such stock solutions the inclusion of chelates is not necessary. It is also said that the nutrient elements should not be provided as chelates.

The present invention now aims to provide a fertilizer composition that is not only a stable acidic stock solution but that also is stable and easy to handle when the pH increases again, for example after adding hard water or when using the composition on calcareous soil, and what is more, when storing it for a prolonged period of time (more noticeably after hard water has been added).

The invention provides a fertilizer composition containing a complex of a metal and a chelating agent from the group of glutamic acid N,N-diacetic acid (GLDA) and iminodisuccinic acid (IDHA), and at least one acidic component, wherein the metal is calcium, magnesium, copper, iron, cobalt, zinc or manganese, preferably copper, iron, cobalt, zinc or manganese, and wherein the pH of the fertilizer composition when measured as a 20 wt% aqueous solution of the composition is lower than 2.5 and more than -1.

Contrary to metal complexes of a number of other chelating agents, like EDTA, the metal complexes of GLDA remain dissolved in the stock solution that can be made from such acidic fertilizers to give a stable formulation and, additionally, when the fertilizer composition of the invention is used in a way that inherently means an increase of the pH of the composition, the components remain dissolved as well.

Accordingly, using the compositions of the present invention not only leads to a fertilizer composition with an acidic pH containing metal complexes in a stable and easy-to-handle form, but also ensures continued satisfactory properties under changing conditions, i.e. it gives a good balance between providing a stable and easy-to-handle acidic product with metal complexes that when present in or converted to a solution is a clear product without precipitates or losses of the metal chelate and continued functionality under changing pH conditions, as well as satisfactory storage stability. Most notably, the compositions of the invention can be used very well in applications involving the presence of calcium.

It may be noted that the Dissolvine GL Technical brochure from AkzoNobel discloses the acid solubility of GDLA compared to that of other chelating agents, which is indicated to be an advantage in cleaning products. The same brochure indicates that aminopolycarboxylates in general can be used to dose essential elements to plants. However, the brochure does not disclose the advantages of GLDA as an ingredient in an acidic fertilizer composition in accordance with this invention. Also, WO 2013/00844 (which document discloses the same as US 2013/012383) disclosing the use of the chelating agents GLDA or MGDA in a fertilizer composition is silent about the beneficial behaviour of GLDA in acidic and alkaline environment. Moreover, this latter document does not disclose or suggest any acidic fertilizer composition that as an aqueous solution would have a pH as low as the ones of the present invention, since the acids mentioned as optional ingredients of the compositions disclosed in WO 2013/00844 are for the most part weak acids and when used in the quantities considered by a person skilled in the technical field of formulating fertilizer compositions, would never give a composition having an acidic pH as claimed. Moreover, in all Examples of this document the pH was brought to a value of about 7 to slightly alkaline (about 8).

US2013/000370 relates to solid mixtures that contain (A) one or more aminocarboxylates that may be GLDA and (B) an additive selected from fatty acid salts, cellulose powder, magnesium oxide, talc, tricalcium phosphate, pyrogenic silicas and precipitated silicas and optionally (C) at least one solid auxiliary. It is said that the mixtures can also be used for producing micronutrients

US2012/027832 relates to molluscidal compositions containing a molluscicide and a promoting additive that can be calcium EDDS. They may additionally contain a chelating agent such as GLDA and it is said that they may include a fertilizer.

JP09136807 discloses biodegradable iron chelate compounds of a.o. GLDA as iron supplier to crops.

In an embodiment of the present invention, the at least one acidic component is a compound which when dissolved in water in an amount of 50 g/l will give a pH of 3 or lower. Examples of the acidic compound include urea phosphate, phosphoric acid, nitric acid, sulfuric acid, a mixture of urea and phosphoric acid, a mixture of ammonia and phosphoric acid, urea nitrate. Preferably, the acidic component is urea phosphate. In a more preferred embodiment, the fertilizer compositions are acidic compositions containing a metal complex of GLDA or IDHA and urea phosphate or a mixture of urea phosphate and calcium biphosphate (PhosCal). Most preferably, the acidic fertilizer compositions contain the metal complex of GLDA.

The invention in addition provides a process to fertilize plants wherein the fertilizer composition is applied to the medium in which the plants grow, or to the plants directly, for example by application on their roots or leaves, though the latter is less preferred.

A medium is defined as the soil, the substrate or the nutrient solution in which plants are growing.

In a preferred embodiment of the fertilizer composition of the present invention, the metal is zinc or manganese.

In yet another preferred embodiment, the fertilizer composition in addition contains calcium biphosphate.

Preferably, the amount of the metal complex is between 0.05 and 10 wt% based on the total solids content of the composition. More preferably, the amount is 0.5 % to 2.5 wt%.

The amount of the acidic component in some embodiments is between 90 and 99.95 wt% and more preferably between 97.5 and 99.5 wt% based on the total solids content of the composition.

The fertilizer composition can be used in several forms such as in the form of particles or as an aqueous liquid, like an aqueous liquid that has a pH of more than 0 and lower than 2.5, when measured as a 20 wt% solution of solids in water. Particles can be of any shape or size and thus also include pellets, tablets, microgranules, granules, powder, grains, etcetera. In a preferred embodiment, granules have a diameter of up to 1 cm, and tablets of up to 10 cm.

The preferred pH will be in the range of from 1 to lower than 2.5, measured on a 20 wt% aqueous solution of the product, wherein the wt% is the total weight of all solids in the product dissolved in the aqueous solution.

In preferred embodiments, when the fertilizer composition of the invention is an aqueous solution, this aqueous solution is a very concentrated aqueous solution, also called a stock solution, for instance containing between 100 and 300 grams of solid material per liter. When the fertilizer composition is in the form of a premix, particles or concentrated aqueous solution, the end user can dilute the particles or stock solution.

The invention therefore also relates to a process wherein the fertilizer composition is first diluted with an aqueous liquid, to make the aqueous solution with the desired concentration on site, as it should be noted that the end user oftentimes needs a solution only containing several grams of solid material per liter, after which the finally diluted formulation is applied to the medium in which the plants grow. In some embodiments the aqueous liquid can be a neutral or acidic aqueous solution, as well as an alkaline aqueous liquid, such as hard water or process water, as said water does not deteriorate the handleability and functionality of the product.

The compositions of the invention can be applied by several methods, such as, preferably, via a concentrated fertilizer solution tank, and later when diluted to form a nutrient solution, via a (drip) irrigation system.

Besides the acidic ingredients such as urea phosphate, in some embodiments the fertilizer composition of the present invention may contain further ingredients, like further phosphorus-containing ingredients, further nitrogen-containing ingredients, and potassium-containing ingredients. These are also called NPKs and are important for plant growth. Examples of NPKs are further products that contain phosphates, such as monoammonium phosphate, monopotassium phosphate, dipotassium phosphate, diammonium phosphate, polyphosphates, nitrates like calcium nitrate or potassium nitrate, or nitric acid, ammonium salts, such as ammonium nitrate or ammonium sulfate, urea, and potassium salts such as potassium nitrate, potassium chloride or potassium sulfate.

Preferably, the fertilizer composition contains at least 1 wt% up to 55 wt% (expressed as P₂O₅) of the phosphorus-containing component, an amount of at least 1 wt% up to 20 wt% (expressed as N) of the nitrogen-containing component and/or, optionally, an amount of up to 20 wt% (expressed as K₂O) of the potassium-containing component, all wt% being based on total solids content of the composition. More preferably, the amount of phosphorus-containing compound is between 5 and 50 wt%, the amount of nitrogen-containing compound between 2 and 15 wt%, and/or the amount of potassium-containing compound between 0 and 15 wt%.

In further embodiments, the fertilizer composition of the invention may contain further ingredients such as boric acid or borates, metal sulfates, ammonium molybdate, sodium molybdate, anti-caking ingredients, dyes, stabilizers, surfactants, flame retardants, bactericides, fungicides, biostimulants, biocides, insecticides, herbicides, antifoaming agents, wetting agents.

### Examples

### Comparative example A

Ultrasol™ Magnum Phoscal ex SQM was used, which is a mixture of 55% urea phosphate and 45% calcium biphosphate (= Ca(H₂PO₄)₂.H₂O). Nine (9) different stock solutions of Ultrasol™ Magnum Phoscal containing varying concentrations of Dissolvine® E-Zn-15 (Zn-EDTA with 14.8% Zn) were prepared

The stock solutions were prepared by mixing different amounts of Ultrasol™ Magnum Phoscal with varying amounts of a 10% stock solution of Dissolvine® E-Zn-15, dissolving the mixture in water, and diluting the stock solutions to 100 ml in a volumetric flask. The intakes are shown in the table below.

| Ratio Phoscal : Zn-EDTA | Concentration | | | | | | pH for 20 wt% aq soln |
|---|---|---|---|---|---|---|---|
| | 100 g/l | | 200 g/l | | 300 g/l | | |
| | Phoscal (g) | Zn-EDTA Stock sol. (g) | Phoscal (g) | Zn-EDTA Stock sol. (g) | Phoscal (g) | Zn-EDTA Stock sol. (g) | |
| 99:1 | 9.9 | 1.0 | 19.8 | 2.1 | 29.7 | 3.1 | 1.7 |
| 98:2 | 9.8 | 2.1 | 19.6 | 4.1 | 29.4 | 6.1 | 1.5 |
| 97:3 | 9.7 | 3.1 | 19.4 | 6.0 | 29.1 | 9.2 | 1.6 |

All solutions were seeded with a few crystals of EDTA acid. The pH values of these concentrated stock solutions varied between 1.6 and 1.9 for the 100 g/l stock solutions, between 1.5 and 1.7 for the 200 g/l stock solutions, and between 1.4 and 1.6 for the 300 g/l stock solutions, respectively. The observations after one day are given in the table below.

| Ratio Phoscal : Zn-EDTA | Concentration | | |
|---|---|---|---|
| | 100 g/l | 200 g/l | 300 g/l |
| 99:1 | No crystals | No crystals | Crystals |
| 98:2 | No crystals | Crystals | Crystals |
| 97:3 | Crystals | Crystals | Crystals |

The observations after one week are given in the table below.

| Ratio Phoscal : Zn-EDTA | Concentration | | |
|---|---|---|---|
| | 100 g/l | 200 g/l | 300 g/l |
| 99:1 | No crystals | Crystals | Crystals |
| 98:2 | Crystals | Crystals | Crystals |
| 97:3 | Crystals | Crystals | Crystals |

Crystallization was also observed without seeding.

### Example 1

Nine (9) different stock solutions of Ultrasol™ Magnum Phoscal containing varying concentrations of Zn-GLDA (14.9% Zn) were prepared.

The stock solutions were prepared by mixing different amounts of Ultrasol™ Magnum Phoscal with varying amounts of a 10% stock solution of Zn-GLDA, dissolving the mixture in water, and diluting the stock solutions to 100 ml in a volumetric flask. The intakes are shown in the table below.

| Ratio Phoscal : Zn-GLDA | Concentration | | | | | | pH for 20 wt% aq soln |
|---|---|---|---|---|---|---|---|
| | 100 g/l | | 200 g/l | | 300 g/l | | |
| | Phoscal (g) | Zn-GLDA Stock sol. (g) | Phoscal (g) | Zn-GLDA Stock sol. (g) | Phoscal (g) | Zn-GLDA Stock sol. (g) | |
| 99:1 | 9.9 | 1.0 | 19.8 | 2.1 | 29.7 | 3.1 | 1.7 |
| 98:2 | 9.8 | 2.1 | 19.6 | 4.1 | 29.4 | 6.0 | 1.8 |
| 97:3 | 9.7 | 3.1 | 19.4 | 6.0 | 29.1 | 9.0 | 1.7 |

All solutions were seeded with a few crystals of GLDA acid. The pH values of these concentrated stock solutions varied between 1.8 and 2.0 for the 100 g/l stock solutions, between 1.7 and 1.8 for the 200 g/l stock solutions, and around 1.5 for the 300 g/l stock solutions, respectively. The observations after one week are given in the table below.

| Ratio Phoscal : Zn-GLDA | Concentration | | |
|---|---|---|---|
| | 100 g/l | 200 g/l | 300 g/l |
| 99:1 | No crystals | No crystals | No crystals |
| 98:2 | No crystals | No crystals | No crystals |
| 97:3 | No crystals | No crystals | No crystals |

It was observed that the seeds had dissolved.

## Claims

1. Fertilizer composition containing a complex of a metal and a chelating agent and at least one acidic component, wherein the metal is calcium, magnesium, copper, iron, cobalt, zinc or manganese, wherein the chelating agent is glutamic acid N,N-diacetic acid (GLDA) or iminodisuccinic acid (IDHA), and wherein the pH of the fertilizer composition when measured as a 20 wt% aqueous solution of the composition is lower than 2.5 and more than -1.

2. Fertilizer composition of claim 1 wherein the at least one acidic component is urea phosphate, phosphoric acid, nitric acid, sulfuric acid, a mixture of urea and phosphoric acid, a mixture of ammonia and phosphoric acid, or urea nitrate.

3. Fertilizer composition of claim 1 or 2 wherein the metal is zinc or manganese.

4. Fertilizer composition of any one of claims 1 to 3 in addition containing calcium bi-phosphate.

5. Fertilizer composition of any one of claims 1 to 4 wherein the amount of the metal complex is between 0.05 and 10 wt% based on the total solids content of the composition.

6. Fertilizer composition of any one of claims 1 to 5 that is in the form of particles or an aqueous liquid.

7. Fertilizer composition of any one of claims 1 to 6 wherein the pH is between 0.5 and 2.5 when measured as a 20 wt% aqueous solution of the composition.

8. Process to fertilize plants wherein the fertilizer composition of any one of claims 1 to 7 is applied to the medium in which the plants grow.

9. Process of claim 8 wherein the fertilizer composition is first diluted with an aqueous liquid, after which it is applied to the medium.

10. Process of claim 9 wherein the aqueous liquid is an alkaline aqueous liquid, such as hard water, process water.

## Patentansprüche

1. Düngemittelzusammensetzung, enthaltend einen Komplex aus einem Metall und einem Chelatbildner und wenigstens eine saure Komponente, wobei das Metall Kalzium, Magnesium, Kupfer, Eisen, Kobalt, Zink oder Mangan ist, wobei der Chelatbildner Glutaminsäure-N,N-Diessigsäure (GLDA) oder Iminodibernsteinsäure (IDHA) ist und wobei der pH-Wert der Düngemittelzusammensetzung, gemessen als 20 Gew.-%-ige wässrige Lösung der Zusammensetzung, weniger als 2,5 und mehr als -1 beträgt.

2. Düngemittelzusammensetzung nach Anspruch 1, wobei die wenigstens eine saure Komponente Harnstoffphosphat, Phosphorsäure, Salpetersäure, Schwefelsäure, eine Mischung aus Harnstoff und Phosphorsäure, eine Mischung aus Ammoniak und Phosphorsäure oder Harnstoffnitrat ist.

3. Düngemittelzusammensetzung nach Anspruch 1 oder 2, wobei das Metall Zink oder Mangan ist.

4. Düngemittelzusammensetzung nach einem der Ansprüche 1 bis 3, die zusätzlich Kalziumbiphosphat enthält.

5. Düngemittelzusammensetzung nach einem der Ansprüche 1 bis 4, wobei die Menge des Metall komplexes zwischen 0,05 und 10 Gew.-%, basierend auf dem Gesamtfeststoffgehalt der Zusammensetzung, beträgt.

6. Düngemittelzusammensetzung nach einem der Ansprüche 1 bis 5, die in Form von Partikeln oder einer wässrigen Flüssigkeit vorhanden ist.

7. Düngemittelzusammensetzung nach einem der Ansprüche 1 bis 6, wobei der pH-Wert zwischen 0,5 und 2,5 liegt, gemessen als 20 Gew.-%ige wässrige Lösung der Zusammensetzung.

8. Verfahren zum Düngen von Pflanzen, wobei die Düngemittelzusammensetzung nach einem der Ansprüche 1 bis 7 auf das Medium angewendet wird, in dem die Pflanzen wachsen.

9. Verfahren nach Anspruch 8, wobei die Düngemittelzusammensetzung zunächst mit einer wässrigen Flüssigkeit verdünnt wird und danach auf das Medium angewendet wird.

10. Verfahren nach Anspruch 9, wobei die wässrige Flüssigkeit eine alkalische wässrige Flüssigkeit, wie hartes Wasser, Prozesswasser, ist.

## Revendications

1. Composition d'engrais contenant un complexe d'un métal et d'un agent chélatant et au moins un composant acide, où le métal est le calcium, le magnésium, le cuivre, le fer, le cobalt, le zinc ou le manganèse, où l'agent chélatant est l'acide glutamique-N,N-diacétique (GLDA) ou l'acide iminodisuccinique (IDHA), et où le pH de la composition d'engrais, lorsqu'il est mesuré avec une solution aqueuse à 20% en poids de la composition, est inférieur à 2,5 et supérieur à -1.

2. Composition d'engrais de la revendication 1, dans laquelle l'au moins un composant acide est le phosphate d'urée, l'acide phosphorique, l'acide nitrique, l'acide sulfurique, un mélange d'urée et d'acide phosphorique, un mélange d'ammoniac et d'acide phosphorique ou le nitrate d'urée.

3. Composition d'engrais de la revendication 1 ou 2, dans laquelle le métal est le zinc ou le manganèse.

4. Composition d'engrais de l'une quelconque des revendications 1 à 3, contenant en outre du biphosphate de calcium.

5. Composition d'engrais de l'une quelconque des revendications 1 à 4, dans laquelle la quantité du complexe métallique est comprise entre 0,05 et 10% en poids par rapport à la teneur totale en matières solides de la composition.

6. Composition d'engrais de l'une quelconque des revendications 1 à 5, qui est sous la forme de particules ou d'un liquide aqueux.

7. Composition d'engrais de l'une quelconque des revendications 1 à 6, dans laquelle le pH est compris entre 0,5 et 2,5 lorsqu'il est mesuré avec une solution aqueuse à 20% en poids de la composition.

8. Procédé pour fertiliser des plantes, dans lequel la composition d'engrais de l'une quelconque des revendications 1 à 7 est appliquée au milieu dans lequel les plantes poussent.

9. Procédé de la revendication 8, dans lequel la composition d'engrais est d'abord diluée avec un liquide aqueux, après quoi elle est appliquée au milieu.

10. Procédé de la revendication 9, dans lequel le liquide aqueux est un liquide aqueux alcalin, tel que l'eau dure, l'eau de traitement.
